Europäisches Patentamt

(19) European Patent Office

Office européen des brevets

(11) Publication number: **0 084 039**
**B1**

(12) EUROPEAN PATENT SPECIFICATION

(45) Date of publication of patent specification: **05.11.86**

(51) Int. Cl.⁴: **B 29 C 65/02**

(21) Application number: **82902163.3**

(22) Date of filing: **13.07.82**

(86) International application number:
**PCT/DK82/00067**

(87) International publication number:
**WO 83/00115 20.01.83 Gazette 83/02**

(54) **A METHOD OF ESTABLISHING SEALED PIPE LENGTHS OF PLASTIC PIPES BY JOINING OF PIPE ELEMENTS, PARTICULARLY DISTRICT HEATING PIPE LENGTHS.**

(30) Priority: **14.07.81 DK 3124/81**

(43) Date of publication of application:
**27.07.83 Bulletin 83/30**

(45) Publication of the grant of the patent:
**05.11.86 Bulletin 86/45**

(84) Designated Contracting States:
**AT BE CH DE FR GB LI LU NL SE**

(56) References cited:
**CH-A- 576 326**
**CH-A- 626 560**
**DE-A-2 012 558**
**DE-A-2 454 706**
**SE-B- 364 100**
**US-A-3 802 943**

(73) Proprietor: **i.c. Moller a/s**
**Treldevej 191**
**DK-7000 Fredericia (DK)**

(72) Inventor: **PEDERSEN, Hans Norgaard**
**Krogen 4, Haldrup**
**DK-8700 Horsens (DK)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

# Description

The present invention relates to a method of establishing pipe lengths of plastic pipes by joining of prefabricated pipe elements, preferably heat insulated pipe elements having an outer mantle pipe of plastics, whereby by said joining it is desirable to utilize or provide such holes therein, which are later on closed in a fully sealed manner.

By the establishing of district heating pipe systems by means of prefabricated insulated pipe elements it is customary that the pipe elements are provided with one or two interior conductor pipes, which are endwise protruding from a surrounding insulation material and from the ends of an outer mantle pipe as surrounding the insulation material, and that the pipe elements are joined by welding together the respective conductor pipe ends and thereafter mounting an outer connector tube between the mantle pipe ends at the joint, whereafter the space inside the connector tube is filled with an insulating foam material as produced by pouring a foaming up liquid down through a hole in an upperr wall portion of the connector tube (DE—A—2012558). Upon the foaming up of the liquid the hole is to be closed absolutely tightly, such that intrusion of moisture from outside will be excluded through the following many years. The connector tube may consist of metal, but many times it is sufficient or desirable that it consists of plastics, and in such cases the connector tubes will constitute plastic pipe pieces which are to be joined to other plastic pipes, viz. the said mantle pipes. As described below, by such joining of plastic pipes the desire as to provision and sealed closing of holes therein may have purposes other than enabling the introduction of a foam material; the basic problem will be the same, however, viz. that an existing or a provided hole in a wall portion of a plastic pipe is wanted to be closed in an entirely sealed manner.

On this background it is the purpose of the invention to provide a method of ensuring a really sealed closing of a hole in the wall of a plastic pipe. For this purpose, hitherto, has been used a stopper, which by passive or active clamping in or into the hole has been able to close the hole, but according to the invention it is desirable to effect the closing by a real welding in of a stopper, because any better closing is hardly achievable when the welding is effectable in a really efficient manner. Thus, it is decisive for the invention that the closing of the hole shall take place by welding in of a stopper, which in practice, therefore, should consist of a weldable plastics material.

Now, parts of plastics may be welded together by various welding methods, e.g. by the welding in of a plastic strip in the joint area between the parts to be joined, and beforehand the invention is restricted to the use of a special and particularly effective welding method, viz. a so-called mirror welding, wheeby the surfaces to be joined are formed or machined to fit each other exactly and are heated prior to or during the joining in such a manner that by the joining the surfaces will be subjected to a welding together without the use of extra welding material, the joint hereby being extended all along the adjoining surfaces as a whole and not only being active in a border area. Thereof, such as achieved by the welding in of a joining strip from the accessible side of the joint.

According to the invention care is taken that the hole in the wall of the plastic pipe appears as or is cut as a hole having an outwardly conically diverging wall shape, while a plastic stopper for closing the hole shows a correspondingly shaped conical outer wall, and that immediately before or by the insertion of the stopper into the hole a welding heating of the relevant surface or surfaces is effectual.

Preferably this heating is effected by means of a special mirror welding hollow body tool, which is conical both on its interior and exterior side, and which is used, in a heated condition, to heat both the hole wall surface and the outer stopper surface. Alternatively, a fully usable surface heating is achievable by sending an electric current through one or more heating wires which are located on or embedded in the relevant surface, if desired with the use of a special stopper prepared accordingly.

Above it has been mentioned as an example that the hole in question is used for the filling in of a framing liquid, but in the discussed connection there will be other important fields of application of the invention. Thus, in case of welded joints of plastic pipes the method may be used for enabling a welding control, the hole then being provided across a welding seam and thereafter being closed upon inspection of the seam cross section. The hole may be provided in two stages, first by taking out a cylindrical bore probe for inspection and then by machining the hole conical prior to the closing thereof.

Another important application of the method according to the invention relates to the provision of a complete sealing of such a small pipe wall area which would otherwise be difficult to seal; this may be actual where a longitudinal welding seam in a welded-in connector skirt meets with the ajoining round going welding seams, or where a roundgoing welding is effected by means of a welding strip member, which may show a sealing problem adjacent its own intermeeting ends. Instead of seeking to fully weld together the material portions at such difficult welding areas it may be considerably easier just to drill out the relevant areas and close the resulting holes by a welding operation according to the invention.

In the following the invention is described in more detail with reference to the drawings, in which:

Fig. 1 is a perspective view of a pipe joint,

Fig. 2 is a perspective view illustrating the invention,

Figs. 3 and 4 are associated sectional views illustrating the mounting of a stopper by mirror welding,

Figs. 5, 6 and 7 are corresponding sectional views of modified systems,

Fig. 8 is a perspective view of an alternative pipe joint, and

Figs. 9—11 are views of another alternative pipe joint.

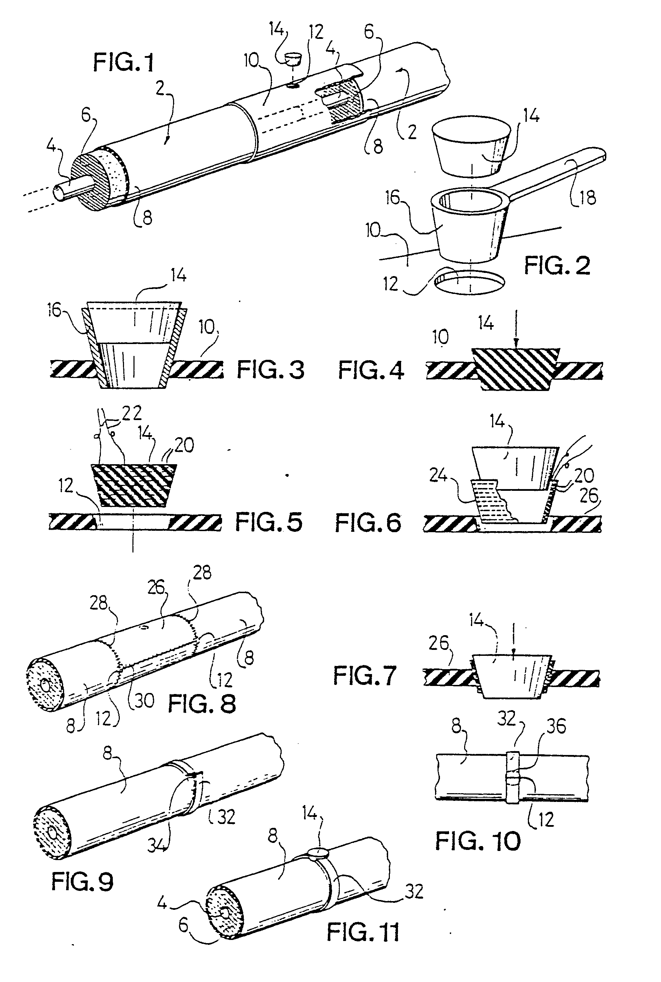

In Fig. 1 is shown a fully conventional joint between two district heating pipes 2 having endwise projecting inner conductor pipes 4, which are welded together as a first stage of the joining work. The pipe ends 4 are projecting from an insulation material 6 which is surrounded by an outer mantle tube 8 of plastics. Then a mantle connector tube 10 of plastics is pushed over the joint from a prelocated position about one of the mantle tube ends, and the connector tube 10 is brought to shrink, whereby it will be endwise tightened about the ends of the mantle tubes 8. Thereafter a foaming-up liquid is poured thrugh an upper hole 12 in the connector tube 10, and the hole 12 is closed by a stopper 14 when the space inside the connector tube has become foam filled.

According to the invention the closing of the hole is effected by machining the hole wall into a conical shape and by using a correspondingly conical stopper 14 of plastics which is prepared by surface heating for insertion welding into the hole 12.

A preferred heating method is illustrated in Figs. 2 and 3. Use is made of a conical tube body 16 consisting of iron or another material which is well suited to give off heat energy, upon being heated, from its surfaces to the outside of the correspondingly conical stopper body 14 when the latter as shown in Fig. 3 is placed inside the tube body 16 and to the edge of the hole 12 by insertion of the tube body therein, respectively. The hole 12 is provided by conical drilling or cutting such that its edge surface will in advance show the same conicity as the tube body 16, although smaller deviations in this respect may be corrected for by way of forcing the heated tube body 16 into the hole 12. The tube body may be heated to a well defined temperature in a suitably adapted heating apparatus (not shown), which is placed near the mounting site, and in practice it is possible to achieve a high quality welding when the tube body 16, with the use of the handle 18 as shown in Fig. 2, is rapidly moved from the heating apparatus to the position shown in Fig. 3, in which the inserted stopper 14 is forced more or less firmly against the tube surface, and when the parts are separated after a short, predetermined time interval and the stopper 14 is immediately thereafter forced into the hole 12 as illustrated in Fig. 4. If the relevant parts are prepared with smooth and regular surfaces it will be possible by this mirror welding technique to produce a first class welding under fully acceptable temperature and pressure affections of the plastic material.

It may be sufficient to effect a heating of only one of the surfaces to be joined.

When the stopper 14 is somewhat longer than the material thickness around the hole 12, then the diameter tolerances of the various parts will be uncritical because of their conical shape.

It will of course be possible to use welding tools corresponding to the tube body 16 and being directly provided or connected with heating means, which may ensure a well defined temperature of the tool in its position as shown in Fig. 3.

In Fig. 5 is shown an embodiment, in which the stopper 14 is provided with a built in electrical heating wire 20 extending through windings down along the outer stopper surface immediately adjacent or inside the surface and having outer connector wires 22, which are connectable to a current source for electrical heating of the outside of the stopper prior to or during the insertion of the stopper into the hole 12; in that case a surface- or mirror welding may be achieved without the use of any special mirror welding tool.

In the arrangement shown in Figs. 6 and 7 is used a conical intermediate ring member 24 which is made of plastics and is provided with a heating wire just as the stopper in Fig. 5. It will be understood that this member 24 may in a well controlled manner be caused to get heated even to initial melting prior to or during the insertion of the stopper 14, whereby the ring body 24 will constitute a lasting welding tool in the joint (Fig. 7).

Fig. 8 shows that a connector tube consists of a sheet member 26, which has, by any suitable welding technique, been welded in between the ends of the mantle tubes 8, flush therewith along annular welds 28, e.g. according to our European Patent Application No. 80201208.8. Normally such a flushing welding in will require an additional longitudinal welding of at least one butt seam 30. At those places where the butt seam 30 abuts the side of the annular welds 28 problems may exist with respect to the attainment of a completely sealed welding, and according to the invention these problems may be overcome in an easy manner by drilling out the relevant local areas to form holes 12 as shown in dotted lines, whereafter these holes are closed by welding in stoppers as described above.

In Fig. 9 is shown a pipe joint, in which the abutting plastic tube ends are welded together by means of a separate welding strip 32, which is laid around the joining area 34 and is welded to the outer surfaces of the opposed mantle tube ends. The welding strip 32 will present its own joint 36, Fig. 10, and with usual welding techniques for the annular welding of the strip 32 this joint will not automatically be welded, i.e. the possibility of a leak will exist.

According to the invention, however, this undesirable possibility will be easily avoidable by machining or drilling out the joint area 36 to form a hole 12 as shown in dotted lines, whereafter this hole is effectively closed by means of a stopper 14 as shown in Fig. 11 and in accordance with the technique according to the invention. It will be unimportant that the welding strip is located on the outside of the mantle tube ends, since according to Fig. 11 a full welding contact will exist between the stopper 14 and the adjacent surfaces of both the mantle tubes and the opposed ends of the strip 32 when these ends are formed by the through-going drilling of the hole 12 (Fig. 10).

The term "welding" as used for joining the prefabricated pipe elements should not necessarily designate a heat welding, since it will be within the scope of the invention to make use of other welding methods, e.g. cold welding or glueing by means of suitable binding agents and suitable application methods therefore.

## Claims

1. A method of establishing sealed pipe lengths of plastic pipes (2) by joining of prefabricated pipe elements, preferably heat insulated pipe elements consisting of one or more interior conductor pipes (4) having a surrounding heat insulation (6) and an outer mantle tube (8) of plastics, wherein the joining of the plastic tubes necessitates the provision of holes (12) and thereafter the sealing of such holes by means of stoppers (14), characterized in that each of said holes (12) is provided by drilling or cutting an outwardly conically diverging hole (12) in the wall of the plastic tube (8) or a connector tube (10) of plastics and that the hole thus provided is closed by means of a correspondingly shaped conical stopper (14) of plastics, the conical outside of which is heated for sealed welding to the hole wall.

2. A method according to claim 1, whereby the outside of the stopper (14) is heated by means of a conical welding mirror, and whereby also the wall of the conical hole (12) is heated by means of a corresponding welding mirror immediately prior to insertion of the stopper (14).

3. A method according to claim 2, characterized in that a conical hollow body (16) is used as the welding mirror, the interior surface of which is used for heating the outside of the stopper (14) while its exterior surface is used to simultaneously heat the wall of the conical hole (12).

4. A method according to claim 1, whereby the heating of at least one of the surfaces to be joined is caused by sending an electric current through one or more heating wires (20) located on the surface or embedded therein, such that the wire is welded in a lasting manner after the insertion of the stopper (14).

## Patentansprüche

1. Verfahren zur Herstellung abgedichteter Kunststoffrohrteile (2), wobei vorgefertigte Rohrelemente, vorzugsweise wärmeisolierte Rohrelemente, bestehend aus einem oder mehreren Führungsinnenrohren (4) mit einer diese umgebenden Wärmeisolierung (6) und einem Kunststoffaussenmantel (8) zusammengefügt werden, wobei zur Zusammenführung der Kunststoffrohre Löcher (12) benötigt sind und wobei die genannten Löcher anschliessend durch Zapfen (14) abgedichtet werden, dadurch gekennzeichnet, dass jedes der genannten Löcher (12) durch Bohren oder Schneiden eines nach aussen konisch divergierenden Loches (12) in der Wand des Kunststoffrhres (2) oder eines Verbindungsrohres (10) aus Kunststoff angeordnet wird, und dass das so angeordnete Loch durch einen entsprechend geformten konischen Zapfen (14) aus Kunststoff abgedichtet wird, dessen konische Aussenseite zum abdichtenden Verschweissen mit der Lochwandung erhitzt wird.

2. Verfahren nach Anspruch 1, wobei die Aussenseite des Zapfens (14) durch einen konischen Schweissspiegel erhitzt wird, und wobei auch die Wandung des konischen Loches (12) durch einen entsprechenden Schweissspiegel unmittelbar vor dem Einbringen des Zapfens (14) erhitzt wird.

3. Verfahren nach Anspruch 2, dadurch gekennzeichnet, dass ein konischer hohl ausgebildeter Körper (16) als Schweissspiegel verwendet wird, dessen Innenfläche zum Erhitzen der Aussenseite des Zapfens (14) verwendet wird, während dessen Aussenfläche dazu verwendet wird, die Wandung des konischen Loches (12) gleichzeitig zu erhitzen.

4. Verfahren nach Anspruch 1, wobei wenigstens eine der zusammenzufügenden Flächen dadurch erhitzt wird, dass man einen elektrischen Strom durch einen oder mehrere auf der genannten Fläche liegende oder in diese eingebettete Heizdrähte (20) führt, und zwar derart, dass der Draht nach dem Einbringen des Zapfens (14) dauerhaft geschweisst ist.

## Revendications

1. Une méthode de fabriquer des sections de tuyau scellé de tuyaux en matière plastique (2) par la jointure d'éléments de tuyau préfabriqués, de préférence des éléments des éléments de tuyau isolés thermiquement composés d'un ou de plusieurs tuyaux conducteurs intrérieurs (4) ayant une isolation thermique environnante (6) et un tube d'enveloppe extérieur (8) en matière plastique, dans laquelle la jointure des tubes en matière plastique nécessite l'application de trous (12) et le scellage ultérieur desdits trous à l'aide de bouchons (14), caractérisée en ce que chacun desdits trous (12) est effectué par la percement ou le coupage d'un trou (12) divergeant coniquement vers l'extérieur dans la paroi du tube en matière plastique (8) ou un tube de raccordement (10) en matière plastique et que le trou ainsi ménagé est fermé à l'aide d'un bouchon conique (14) en matière plastique formé analoguement, dont l'extérieur conique est chauffé en vue de son soudage scellé à la parroi du trou.

2. Une méthode selon la revendication 1, dans laquelle l'extérieur du bouchon (14) est chauffé à l'aide d'un miroir de soudure conique, et dans laquelle également la paroi du trou conique (12) est chauffé à l'aide d'un miroir de soudure correspondante immédiatement avant l'insertion du bouchon (14).

3. Une méthode selon la revendication 2, caractérisée en ce qu'un corps creux conique (16) est utilisé comme le miroir de soudure, dont la surface intérieure est utilisée pour chauffer l'extérieur du bouchon (14), alors que sa surface extérieure est employée pour chauffer simultanément la paroi du trou conique (12).

4. Une méthode selon la revendication 1, dans laquelle le chauffage d'au moins une des surfaces à joindre est causé par un courent électrique à travers un ou plusieurs fils de chauffage (20) situés sur la surface ou y encastrés, de façon à ce que le fil est soudé là-dedans d'une façon permanente après l'insertion du bouchon (14).

FIG. 1

FIG. 2

FIG. 3

FIG. 4

FIG. 5

FIG. 6

FIG. 7

FIG. 8

FIG. 9

FIG. 10

FIG. 11